# EUROPÄISCHE PATENTSCHRIFT

(11) **EP 1 256 754 B1**
(45) Veröffentlichungstag und Bekanntmachung des Hinweises auf die Patenterteilung: **10.01.2007**
(21) Anmeldenummer: 02008378.8
(22) Anmeldetag: 12.04.2002
(51) Int. Cl.: F16L 33/04

(54) **Rohrschelle**
Pipe clamp
Collier de serrage

(30) Priorität: 10.05.2001 DE 10122647
(43) Veröffentlichungstag der Anmeldung: 13.11.2002
(73) Patentinhaber: Rasmussen GmbH, 63477 Maintal (DE)
(72) Erfinder: Wachter, Gerhard, 63654 Büdingen (DE)
(74) Vertreter: Knoblauch, Andreas

(56) Entgegenhaltungen:
- DE-A- 2 926 626

## Beschreibung

Die Erfindung betrifft eine Rohrschelle, insbesondere Rohrkupplung, mit einem Schellenband, zwei Spannbacken, einer Spannschraube und einer mit der Spannschraube zusammenwirkenden Mutter, die zwischen zwei radial vorstehenden Laschen im Bereich einer Spannbacke angeordnet ist. Eine derartige Schelle ist aus der DE 2 926 626 bekannt.

Weiterhin wird eine derartige Rohrschelle unter der Bezeichnung "Dükorapid" von der Eisenwerke Fried. Wilh. Düker GmbH & Co. KGaA, Karlstadt/Main, Deutschland vertrieben.

Bei derartigen Rohrschellen ist das Schellenband in der Regel kreislinienförmig ausgebildet, wobei sich die Enden des Schellenbandes überlappen. An den Enden des Schellenbandes sind die beiden Spannbacken angeordnet, die mit Hilfe der Spannschraube und der Mutter aufeinander zu bewegt werden, wenn die Spannschraube weiter in die Mutter hineingedreht wird. Wenn sich die Spannbacken einander annähern, dann vermindert sich der Durchmesser des vom Schellenband umgrenzten Raumes, so daß die Rohrschelle auf dem Umfang eines Rohres festgespannt werden kann. Das gleiche gilt in entsprechender Weise dann, wenn die Rohrschelle als Rohrkupplung ausgebildet ist und gleichzeitig an den Enden zweier Rohre im Bereich der Stoßstelle zwischen den beiden Rohren festgelegt wird.

In vielen Fällen ist es schwierig, die Rohrschelle auf das Rohr aufzuführen. In diesem Fall neigt der Monteur dazu, die Spannschraube vollständig aus der Mutter herauszudrehen und das Schellenband weiter aufzubiegen. Wenn das Schellenband dann an der gewünschten Position positioniert worden ist, wird das Schellenband wieder zusammengebogen und die Spannschraube wird in die Mutter eingeschraubt, um die Spannbacken wieder einander anzunähern. Allerdings erfordert es bei dieser Vorgehensweise eine gewisse Geschicklichkeit, die Spannschraube wieder in die Mutter einzuschrauben, weil die Mutter in der Regel zwischenzeitlich ihre Position geändert hat. Man muß also zusätzlich auf die Mutter einwirken, um sie wieder in die richtige Position zu bringen.

Der Erfindung liegt die Aufgabe zugrunde, die Handhabung zu vereinfachen.

Diese Aufgabe wird bei einer Rohrschelle der eingangs genannten Art dadurch gelöst, daß mindestens eine Lasche eine Ausformung aufweist, die auf die andere Lasche hin gerichtet ist und eine Sicherungsfläche der Mutter radial relativ zum Schellenband hintergreift.

Die Ausformung der Lasche sorgt also dafür, daß die Mutter - bezogen auf das Schellenband in Radialrichtung - festgehalten wird. Sämtliche Richtungsangaben beziehen sich im folgenden auf das Schellenband. Wenn die Mutter in Radialrichtung festgehalten wird, dann hat sie automatisch die richtige Position für die Spannschraube, so daß es im Grunde genommen ausreicht, wenn man die Spannschraube mit einer Drehbewegung wieder in die Mutter einführt. Ein zusätzliches Positionieren der Mutter oder ein längeres Suchen mit der Spitze der Spannschraube kann entfallen. Die Montagezeit wird drastisch verkürzt. Die Gefahr, daß sich die Mutter auf der Spannschraube verkantet und dabei das Gewinde beschädigt wird, ist deutlich verringert. Dementsprechend wird die Zuverlässigkeit bei der Befestigung der Rohrschelle erhöht.

Vorzugsweise ist die Ausformung am Ende der Lasche angeordnet. Dies erleichtert zum einen die Herstellung der Rohrschelle. Zum anderen wird auf diese Weise die Gefahr verringert, daß bei der Befestigung der Mutter an der Rohrschelle mit Hilfe der Lasche Abschnitte der Lasche gebildet werden, die von der Mutter wegstehen. Bei derartigen Abschnitten besteht die Gefahr, daß sie versehentlich aufgebogen werden, so daß die Mutter aus der Rohrschelle wieder herausfallen würde.

Vorzugsweise ist die Ausformung aus der Lasche herausgebogen. Ein Biegevorgang läßt sich bei der Herstellung der Rohrschelle mit relativ wenig Aufwand realisieren, weil die Laschen in der Regel bereits aus einem Teil herausgebogen sind, das die eine Spannbacke trägt.

Vorzugsweise ist die Sicherungsfläche relativ zum Schellenband geneigt. Die Neigung verläuft hierbei in Axialrichtung. Dies hat den Vorteil, daß die Ausformung ebenfalls nur eine beschränkte Neigung aufweisen muß. und die Mutter trotzdem mit einer erhöhten Zuverlässigkeit gehalten wird.

Vorzugsweise ist die Sicherungsfläche in einer Vertiefung in einer Umfangsfläche der Mutter angeordnet. Damit lassen sich die Laschen relativ kurz halten. Sie müssen also nicht die Mutter komplett umgreifen. Dennoch wird eine ausreichende Zuverlässigkeit beim Festhalten der Mutter an der Rohrschelle erzielt.

Bevorzugterweise weist die Lasche einen Hauptabschnitt, der mit der Sicherungsfläche zusammenwirkt, und einen Zusatzabschnitt auf, der auf der der Spannbacke gegenüberliegenden Seite der Mutter angeordnet ist. Der Zusatzabschnitt bewirkt, daß die Mutter auch in Umfangsrichtung der Rohrschelle zuverlässig festgehalten wird. Die Umfangsrichtung der Rohrschelle entspricht der Axialrichtung der Mutter. Die Mutter wird dadurch unverlierbar an der Rohrschelle festgehalten, d.h. der Monteur muß nach dem Herausschrauben der Spannschraube keine weiteren Maßnahmen treffen, um sicherzustellen, daß die Mutter nicht verloren geht. Die Mutter ist in Umfangsrichtung des Schellenbandes auf der einen Seite durch die Spannbacke und auf der anderen Seite durch den Zusatzabschnitt gehalten.

Dies läßt sich besonders einfach dadurch realisieren, daß der Zusatzabschnitt länger als der Hauptabschnitt der Lasche ausgebildet ist. Wenn der Hauptabschnitt in eine Vertiefung an der Umfangsfläche der Mutter eingebogen wird, dann steht der Zusatzabschnitt über die Stirnseite der Mutter vor und hindert sie an einer Bewegung weg von der Spannbacke.

Alternativ oder zusätzlich dazu kann der Zusatzabschnitt stärker auf die gegenüberliegende Lasche hin verformt sein als der Hauptabschnitt. Auch auf diese Weise ist es möglich, den Zusatzabschnitt vor die Stirnseite der Mutter zu bringen, um die Mutter an einer Bewegung weg von der Spannbacke zu hindern.

Bevorzugterweise ist zwischen der Lasche und der Spannbacke ein Abstand vorgesehen. Dieser Abstand hat in der Hauptsache herstellungstechnische Gründe. Beim Herausformen der Lasche aus dem Teil, der auch die Spannbacke trägt, wird vermieden, daß die Spannbacke durch diesen Formungsvorgang negativ beeinflußt wird.

Vorzugsweise weisen beide Laschen eine Ausformung auf. Die Mutter wird dann auf zwei gegenüberliegenden Seiten gehalten. Dies erhöht die Verdrehsicherung der Mutter in der Rohrschelle und erhöht die Zuverlässigkeit beim Festhalten der Mutter an der Rohrschelle.

Bevorzugterweise wirkt eine Stirnseite mindestens einer Lasche mit einer Gegenfläche an der Mutter zusammen. Dies läßt sich besonders einfach dann realisieren, wenn die Lasche in eine Vertiefung eingeformt wird. Die Gegenfläche verbessert die Verdrehsicherung der Mutter an der Rohrschelle. Wenn die Spannschraube in die Mutter eingeschraubt wird, übt sie ein Drehmoment auf die Mutter aus, das versucht, die Mutter in die gleiche Richtung wie die Spannschraube zu drehen. Wenn nun eine Gegenfläche der Mutter an einer Stirnseite der Lasche zur Anlage kommt, dann wird eine Drehbewegung der Mutter mit einer noch besseren Zuverlässigkeit verhindert, weil für eine derartige Drehbewegung ein relativ starkes Verformen der Lasche erforderlich wäre, das sich mit einem einfachen Schraubmoment nicht aufbringen läßt.

Die Erfindung wird im folgenden anhand von bevorzugten Ausführungsbeispielen in Verbindung mit einer Zeichnung näher beschrieben. Hierin zeigen:
- Fig. 1: eine Seitenansicht einer Rohrschelle,
- Fig. 2: eine perspektivische Ansicht einer Rohrschelle,
- Fig. 3: eine Mutter, die mit Laschen gehalten ist,
- Fig. 4: die Mutter mit zusätzlicher Axialsicherung,
- Fig. 5: die Mutter nach Fig. 4 in Seitenansicht,
- Fig. 6: eine Spannbacke in perspektivischer Darstellung,
- Fig. 7: die Spannbacke nach Fig. 6 mit eingesetzter Mutter und
- Fig. 8: verschiedene Ausgestaltungen von Muttern.

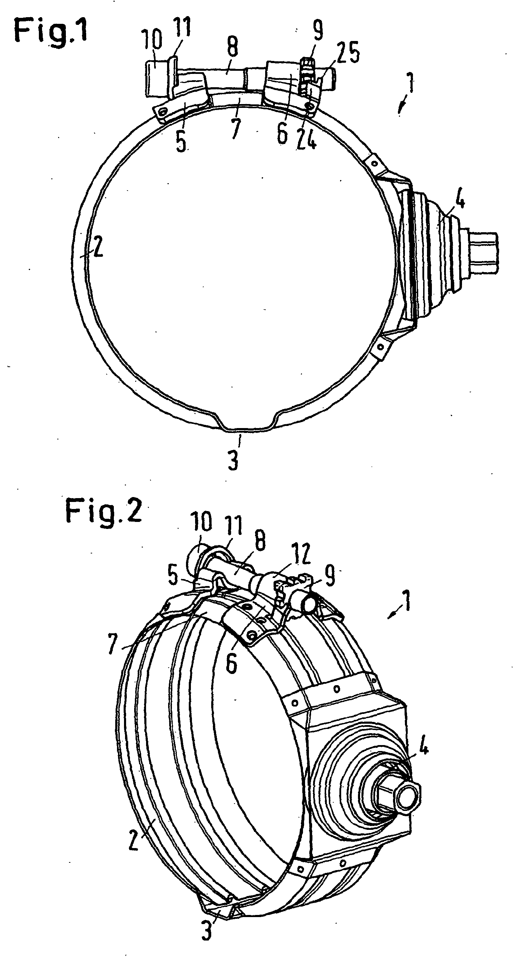

Fig. 1 zeigt eine Rohrschelle 1 mit einem Schellenband 2, das im wesentlichen kreislinienförmig geführt ist und einen Scharnierabschnitt 3 aufweist, an dem das Schellenband 2 bei einer Montage auseinandergebogen werden kann. Am Schellenband 2 kann eine Befestigungsgeometrie 4 angeordnet sein, in die beispielsweise ein Gewindebolzen eingeschraubt werden kann.

An jedem Ende des Schellenbandes 2 ist eine Spannbacke 5, 6 angeordnet. Ein Ende des Schellenbandes 2 kann mit einer Verlängerung 7 versehen sein, die das andere Ende des Schellenbandes 2 untergreift, so daß sich in der in Fig. 1 dargestellten Situation eine kreisförmig geschlossene Geometrie des Schellenbandes 2 ergibt.

Die beiden Spannbacken 5, 6 werden mit Hilfe eines Spannbolzens 8, der mit der einen Spannbacke 5 zusammenwirkt, und in eine Mutter 9 eingeschraubt ist, die mit der anderen Spannbacke 6 zusammenwirkt, gegeneinander verspannt. Wenn der Schraubbolzen 8 in die Mutter 9 eingeschraubt wird, dann werden die beiden Spannbacken 5, 6 aufeinander zu bewegt. Auf diese Weise wird der Durchmesser des vom Schellenband 2 umgrenzten Raumes verringert. Die Rohrschelle 1 kann auf diese Weise am Umfang eines Rohres festgespannt werden. Wenn die Rohrschelle 1 im Bereich der Stoßkante zweier Rohre angeordnet ist und die entsprechende axiale Ausdehnung aufweist, dann kann die Rohrschelle 1 auch als Rohrkupplung verwendet werden.

Die Spannschraube 8 weist einen Schraubkopf 10 auf, der einen kappenartigen Vorsprung 11 aufweist, mit dem sich der Schraubkopf 10 an der Spannbacke 5 verhaken kann. Auf diese Weise wird sichergestellt, daß sich die Spannschraube 8 nicht in Radialrichtung von der Spannbacke 5 entfernen kann. In an sich bekannter Weise schnappt der Schraubkopf 10 hinter der Spannbacke 5 ein, wenn das Schellenband zusammengedrückt wird.

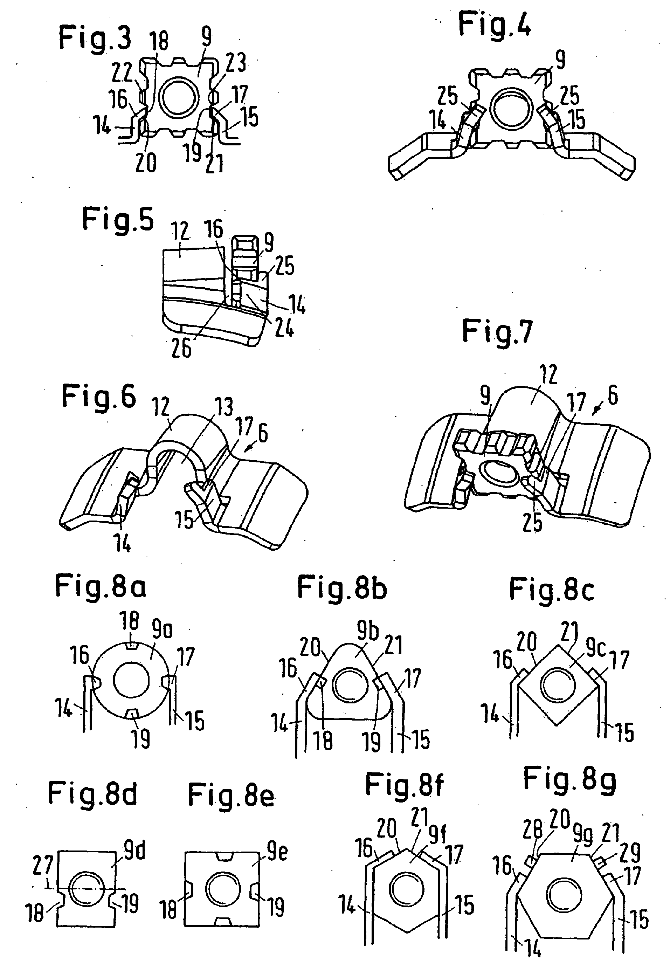

Die andere Spannbacke 6 weist einen Abschnitt 12 auf, der gebogen ist wie ein umgekehrtes U. Damit ergibt sich zwischen dem Spannband 2 und dem Abschnitt 12 ein tunnelartiger Durchgang, durch den die Spannschraube 8 geführt ist. Die Mutter 9 liegt an der Stirnseite dieses Tunnels 13 (Fig. 6) an, wenn die Spannschraube 8 so weit in die Mutter 9 eingeschraubt ist, daß die beiden Spannbacken 5, 6 aufeinander zu gezogen werden. Wenn die Spannschraube 8 in die Mutter 9 eingeschraubt ist, dann sind die Spannschraube 8 und die Mutter 9 unverlierbar in der Rohrschelle 1 gehalten.

Um zu verhindern, daß die Mutter 9 ihre Position in der Rohrschelle verläßt, wenn die Spannschraube 8 nicht eingeschraubt ist, sind an der Spannbacke 6 auf der Seite des Tunnels 13, auf der die Mutter 9 angeordnet ist, Laschen 14, 15 angeordnet, die radial in bezug auf das Schellenband 2 nach außen wegstehen. Die Mutter 9 ist zwischen den beiden Laschen 14, 15 angeordnet.

Die beiden Laschen 14, 15 weisen jeweils einwärts, d.h. in Richtung auf die andere Lasche hin, gebogene Ausformungen 16, 17 auf, die in Vertiefungen 18, 19 an der Umfangsfläche der Mutter 9 eintreten. Sie liegen dabei aw Sicherungsflächen 20, 21 an und verhindern dadurch, daß die Mutter 9 radial vom Schellenband 2 weg bewegt werden kann. Die Sicherungsflächen 20, 21 haben eine Neigung relativ zum Schellenband 2, wobei diese Neigung in Axialrichtung (bezogen auf die Rohrschelle 1) verläuft. Es ist also nicht erforderlich, daß man die Ausformungen 16, 17 der Laschen 14, 15 rechtwinklig umbiegt. Eine Biegung der Enden der Laschen 14, 15, die die Ausformungen 16, 17 bilden, um einen Winkel im Bereich von 20 bis 45° reicht durchaus aus, um die Mutter 9 gegen eine Radialbewegung zu sichern.

Die Vertiefungen 18, 19 bilden gleichzeitig Gegenflächen 22, 23 für Stirnseiten der Flansche 14, 15, d.h. die Enden der Ausformungen 16, 17. Wenn nun die Mutter 9 gedreht wird, dann stößt eine der beiden Gegenflächen 22, 23 an der entsprechenden Stirnseite der Ausformungen 16, 17 an, wodurch ein Weiterdrehen verhindert wird, wenn die Mutter 9 durch die Laschen 14, 15 und die Ausformungen 16, 17 nicht ohnehin bereits klemmend festgehalten wird.

Die Laschen 14, 15 weisen einen Hauptabschnitt 24 auf, der mit den Sicherungsflächen 20, 21 zusammenwirkt, und einen Zusatzabschnitt 25, der auf der der Spannbacke 6 gegenüberliegenden Seite der Mutter 9 angeordnet ist. Wie insbesondere aus den Fig. 6 und 7 zu erkennen ist, wird der Zusatzabschnitt 25 gemeinsam mit der Ausformung 17 einwärts in Richtung auf die Mutter 9 gebogen und kommt dadurch vor der Mutter 9 zu liegen. Die Mutter 9 ist damit zwischen dem Zusatzabschnitt 25 und dem Abschnitt 12 der Spannbacke 6 gehalten. Zusätzlich hat diese Ausbildung den Vorteil, daß man durch das Einbiegen des Zusatzabschnitts 25 auch eine entsprechende Biegung der Ausformung 16, 17 gegenüber der Lasche 14, 15 erreichen kann, so daß die Fertigung erleichtert wird. Es sind also nur relativ wenige Schritte erforderlich, um die Mutter 9 zuverlässig an der Spannbacke 6 zu befestigen.

Wie insbesondere aus Fig. 5 zu erkennen ist, ist zwischen den Laschen 14, 15 und dem Abschnitt 12 der Spannbacke 6 ein Abstand 26 vorgesehen. Dieser Abstand hat den Vorteil, daß ein Verbiegen der Laschen 14, 15 praktisch keinen Einfluß auf die Gestalt des Abschnitts 12 der Spannbacke 6 bewirkt, der den Tunnel 13 umgibt.

Der axiale Abstand (bezogen auf die Mutter 9) zwischen dem Zusatzabschnitt 25 und dem Abschnitt 12 ist größer als die axiale Erstreckung der Mutter 9. Die Mutter 9 ist also mit einem gewissen axialen Spiel in der Spannbacke 6 befestigt, was die Handhabung erleichtert. Auch kann ein kleines Spiel in Radialrichtung (bezogen auf die Rohrschelle 1) zulässig sein, was die Einführung der Spannschraube 8 in die Mutter 9 erleichtert. Insgesamt ist aber die Mutter 9 in der Rohrschelle 1 im Bereich der Spannbacke 6 festgelegt und unverlierbar gehalten. Die Spannschraube 8 kann mit relativ geringem Aufwand in die Mutter 9 eingeschraubt werden.

Die Herstellung der Spannbacke 6 ist ebenfalls relativ einfach. Die Spannbacke 6 kann insgesamt als Biegeteil ausgebildet werden, bei dem zunächst ein Blech so ausgestanzt wird, daß die Bereiche für den Abschnitt 12 und die Laschen 14, 15 zur Verfügung stehen. Danach können die Laschen 14, 15 gemeinsam mit dem Abschnitt 12 gebogen werden. Wenn die Mutter 9 eingesetzt ist, werden die Ausformungen 16, 17 nach innen, d.h. auf die Mutter 9, zu gebogen.

Beim Ausführungsbeispiel, das in den Fig. 1 bis 7 dargestellt ist, hat die Mutter 9 eine im wesentlichen quadratische Form, die mit insgesamt acht Vertiefungen 18, 19 auf ihrer Umfangsfläche versehen ist. Diese Ausgestaltung hat den Vorteil, daß man die Mutter 9 in praktisch jeder Ausrichtung, bei der eine Fläche parallel zum Spannband 2 verläuft, in der Spannbacke 6 montiert werden kann. Fig. 8 zeigt nun eine Reihe von Variationsmöglichkeiten für die Mutter 9, mit denen sich das gewünschte Ergebnis in gleicher oder zumindest annähernd gleicher Weise realisieren läßt. Gleiche Teile und entsprechende Teile sind mit den gleichen Bezugszeichen wie in den Fig. 1 bis 7 versehen.

Fig. 8a zeigt eine Mutter 9a mit im wesentlichen kreisrunder Form, die an ihrer Umfangsfläche mehrere Vertiefungen 18, 19 aufweist, in die die Ausformungen 16, 17 an den Laschen 14, 15 in entsprechender Weise eingreifen können.

Fig. 8b zeigt eine Mutter 9b, die im wesentlichen eine dreieckige Form aufweist. Hier können Vertiefungen 18, 19 vorgesehen sein. Dies ist jedoch nicht zwingend erforderlich. Die Laschen 14, 15 können mit ihren Ausformungen 16, 17 jeweils um einen Abschnitt einer Schrägfläche der Mutter 9b gebogen sein und so die Mutter 9b gegen eine radiale Herausbewegung aus der Rohrschelle 1 sichern.

Fig. 8c zeigt eine Mutter 9c, die ebenfalls eine quadratische Form aufweist. Diese Mutter 9c ist allerdings auf der Spitze montiert, so daß die Ausformungen 16, 17 der Laschen 14, 15 ebenfalls auf Sicherungsflächen 20, 21 wirken, die relativ zum Schellenband 2 geneigt sind. Dadurch ist es nicht erforderlich, daß die Laschen 14, 15 um die gesamte Mutter 9c herumgeführt sind.

Fig. 8d zeigt eine Mutter 9d, die im wesentlichen der Mutter 9 aus den Fig. 1 bis 7 entspricht. Allerdings sind hier weitaus weniger Vertiefungen vorgesehen. Vorgesehen sind lediglich die Vertiefungen 18, 19, die man in diesem Fall zur Montage benötigt. Diese Vertiefungen 18, 19 sind unterhalb einer Mittellinie 27 angeordnet, wie auch die Vertiefungen 18, 19 (Fig. 3) jedesmal unterhalb einer Mittellinie angeordnet sind. Dies schafft günstige Verhältnisse beim Festhalten der Mutter 9d im Bereich der Spannbacke 6.

Fig. 8e zeigt ein Ausführungsbeispiel, bei dem eine Mutter 9e einen quadratischen Querschnitt hat und in allen vier Flächen der Umfangswand Ausnehmungen 18, 19 aufweist. Diese Ausnehmungen sind jedoch symmetrisch angeordnet.

Fig. 8f zeigt eine Sechskantmutter 9f, die auf der Spitze stehend montiert ist, so daß sich Sicherungsflächen 20, 21 ergeben. Diese Mutter weist, wie die Mutter 9c in Fig. 8c auch, keine Vertiefungen an der Umfangswand auf.

Fig. 8g zeigt eine weitere Mutter 9g, die ebenfalls als Sechskantmutter ausgebildet ist. Auch bei dieser Mutter 9g sind die Sicherungsflächen 20, 21 zum Spannband 2 geneigt. Zusätzlich sind an den Sicherungsflächen Vorsprünge 28, 29 angeordnet, die dann Gegenflächen bilden, die mit den Stirnseiten der Ausformungen 16, 17 zusammenwirken.

## Patentansprüche

1. Rohrschelle, insbesondere Rohrkupplung, mit einem Schellenband, zwei Spannbacken, einer Spannschraube und einer mit der Spannschraube zusammenwirkenden Mutter, die zwischen zwei radial vorstehenden Laschen im Bereich einer Spannbacke angeordnet ist, **dadurch gekennzeichnet, daß** mindestens eine Lasche (14, 15) eine Ausformung (16, 17) aufweist, die auf die andere Lasche (15, 14) hin gerichtet ist und eine Sicherungsfläche (20, 21) der Mutter (9) radial relativ zum Schellenband (2) hintergreift.

2. Rohrschelle nach Anspruch 1, **dadurch gekennzeichnet, daß** die Ausformung (16, 17) am Ende der Lasche (14, 15) angeordnet ist.

3. Rohrschelle nach Anspruch 1 oder 2, **dadurch gekennzeichnet, daß** die Ausformung (16, 17) aus der Lasche herausgebogen ist.

4. Rohrschelle nach einem der Ansprüche 1 bis 3, **dadurch gekennzeichnet, daß** die Sicherungsfläche (20, 21) relativ zum Schellenband (2) geneigt ist.

5. Rohrschelle nach einem der Ansprüche 1 bis 4, **dadurch gekennzeichnet, daß** die Sicherungsfläche (20, 21) in einer Vertiefung (18, 19) in einer Umfangsfläche der Mutter (9) angeordnet ist.

6. Rohrschelle nach einem der Ansprüche 1 bis 5, **dadurch gekennzeichnet, daß** die Lasche (14, 15) einen Hauptabschnitt (24), der mit der Sicherungsfläche (20, 21) zusammenwirkt, und einen Zusatzabschnitt (25) aufweist, der auf der der Spannbacke (6) gegenüberliegenden Seite der Mutter (9) angeordnet ist.

7. Rohrschelle nach Anspruch 6, **dadurch gekennzeichnet, daß** der Zusatzabschnitt (25) länger als der Hauptabschnitt (24) der Lasche (14, 15) ausgebildet ist.

8. Rohrschelle nach Anspruch 6 oder 7, **dadurch gekennzeichnet, daß** der Zusatzabschnitt (25) stärker auf die gegenüberliegende Lasche hin verformt ist als der Hauptabschnitt (24).

9. Rohrschelle nach einem der Ansprüche 1 bis 8, **dadurch gekennzeichnet, daß** zwischen der Lasche (14, 15) und der Spannbacke (6) ein Abstand (26) vorgesehen ist.

10. Rohrschelle nach einem der Ansprüche 1 bis 9, **dadurch gekennzeichnet, daß** beide Laschen (14, 15) eine Ausformung (16, 17) aufweisen.

11. Rohrschelle nach Anspruch 10, **dadurch gekennzeichnet, daß** eine Stirnseite mindestens einer Lasche (14, 15) mit einer Gegenfläche (22, 23; 28, 29) an der Mutter (9; 9g) zusammenwirkt.

## Claims

1. Pipe clamp, in particular pipe coupling, with a clamp band, two clamping jaws, a clamping screw and a nut cooperating with the clamping screw, arranged between two radially projecting brackets in the area of a clamping jaw, **characterised in that** at least one bracket (14, 15) has a moulded out area (16, 17) pointing towards the other bracket (15, 14) and gripping behind a securing face (20, 21) of the nut (9) radially relative to the clamp band (2).

2. Pipe clamp according to claim 1, **characterised in that** the moulded out area (16, 17) is arranged at the end of the bracket (14, 15).

3. Pipe clamp according to claim 1 or 2, **characterised in that** the moulded out area (16, 17) is bent out of the bracket.

4. Pipe clamp according to one of claims 1 to 3, **characterised in that** the securing face (20, 21) is inclined relative to the pipe clamp (2).

5. Pipe clamp according to one of claims 1 to 4, **characterised in that** the securing face (20, 21) is arranged in a recess (18, 19) in a peripheral face of the nut (9).

6. Pipe clamp according to one of claims 1 to 5, **characterised in that** the bracket (14, 15) has a main section (24), which cooperates with the securing face (20, 21) and an additional section (25), which is arranged on the side of the nut (9) opposite the clamping jaw (6).

7. Pipe clamp according to claim 6, **characterised in that** the additional section (25) is constructed as longer than the main section (24) of the bracket (14, 15).

8. Pipe clamp according to claim 6 or 7, **characterised in that** the additional section (25) is deformed more sharply towards the opposite bracket than the main section (24).

9. Pipe clamp according to one of claims 1 to 8, **characterised in that** a distance (26) is provided between the bracket (14, 15) and the clamping jaw (6).

10. Pipe clamp according to one of claims 1 to 9, **characterised in that** both brackets (14, 15) have a moulded out area (16, 17).

11. Pipe clamp according to claim 10, **characterised in that** a front face of at least one bracket (14, 15) cooperates with an opposite face (22, 23; 28, 29) on the nut (9; 9g).

## Revendications

1. Collier pour tube, en particulier coupleur pour tube, comprenant une bande de collier, deux mâchoires de serrage, une vis de serrage et un écrou qui coopère avec la vis et serrage et qui est agencé dans la région d'une mâchoire de serrage entre deux pattes en dépassement radial, **caractérisé en ce qu'**au moins une patte (14, 15) comporte une conformation (16, 17) qui est orientée vers l'autre patte (15, 14) et qui engage par l'arrière une surface de blocage (20, 21) de l'écrou (9) radialement par rapport à la bande de collier (2).

2. Collier pour tube selon la revendication 1, **caractérisé en ce que** la conformation (16, 17) est agencée à l'extrémité de la patte (14, 15).

3. Collier pour tube selon la revendication 1 ou 2, **caractérisé en ce que** la conformation (16, 17) est cintrée à partir de la patte.

4. Collier pour tube selon l'une quelconque des revendications 1 à 3, **caractérisé en ce que** la surface de blocage (20, 21) est inclinée par rapport à la bande de collier (2).

5. Collier pour tube selon l'une quelconque des revendications 1 à 4, **caractérisé en ce que** la surface de blocage (20, 21) est agencée dans un renfoncement (18, 19) dans une surface périphérique de l'écrou (9).

6. Collier pour tube selon l'une quelconque des revendications 1 à 5, **caractérisé en ce que** la patte (14, 15) comprend un tronçon principal (24) qui coopère avec la surface de blocage (20, 21), et un tronçon additionnel (25) qui est agencé sur le côté de l'écrou (9) opposé à la mâchoire de serrage (6).

7. Collier pour tube selon la revendication 6, **caractérisé en ce que** le tronçon additionnel (25) est réalisé plus long que le tronçon principal (24) de la patte (14, 15).

8. Collier pour tube selon la revendication 6 ou 7, **caractérisé en ce que** le tronçon additionnel (25) est déformé plus fortement vers la patte opposée que le tronçon principal (24).

9. Collier pour tube selon l'une quelconque des revendications 1 à 8, **caractérisé en ce qu'**il est prévu une distance (26) entre la patte (14, 15) et la mâchoire de serrage (6).

10. Collier pour tube selon l'une quelconque des revendications 1 à 9, **caractérisé en ce que** les deux pattes (14, 15) présentent une conformation (16, 17).

11. Collier pour tube selon la revendication 10, **caractérisé en ce qu'**une surface frontale d'au moins une patte (14, 15) coopère avec une contre-surface (22, 23 ; 28, 29) sur l'écrou (9 ; 9g).
